# EUROPEAN PATENT APPLICATION

(11) **EP 2 407 774 A1**
(43) Date of publication of application: **18.01.2012**
(21) Application number: 11172112.2
(22) Date of filing: 30.06.2011
(51) Int. Cl.: G01N 27/22, G01N 15/06

(54) **Particulate matter detector, and method for detecting particulate matter**

(30) Priority: 12.07.2010 JP 2010158154; 14.06.2011 JP 2011132479
(71) Applicant: NGK Insulators, Ltd., Nagoya-city, Aichi 467-8530 (JP)
(72) Inventor: Yokoi, Shoji, Nagoya-city, Aichi 467-8530 (JP); Sakurai, Takayuki, Nagoya-City, Aichi 467-8530 (JP)
(74) Representative: Paget, Hugh Charles Edward

(57) **Abstract**

A particulate matter detector 100 of the present invention has an electrode portion 21, a signal measuring portion 22, and a calculation portion 23 and further has a measurement signal memory portion 24 for memorizing the values of the measurement signal measured by the signal measuring portion 22, a signal judgement portion 25 for judging the necessity of correction by comparing a calculated amount of change with a value of a background signal noise of the measurement signal after calculating an amount of change between values of the consecutive measurement signals of 10 or less samples memorized by the measurement signal memory portion 24, and a correction portion for correcting the value of the measurement signal, if the calculated amount of the change shows a decrease of at least twice the value of the background signal noise of the measurement signal, by adding the decrease value to the value of the measurement signal where the decrease is confirmed.

## Description

### Background of the Invention and Related Art Statement

The present invention relates to a particulate matter detector and a method for detecting particulate matter. More specifically, the present invention relates to a particulate matter detector capable of measuring the amount of particulate matter contained in exhaust gas with high accuracy and to a method for detecting the particulate matter using the particulate matter detector.

Particulate matter (PM) such as soot is contained in flue exhaust gas and diesel engine exhaust gas and causes air pollution. In order to remove particulate matter, filters (diesel particulate filters: DPFs) made of ceramic or the like are widely used. A ceramic DPF can be used for a long period of time. However, a defect of a crack, melt, or the like may be caused due to thermal deterioration or the like, and particulate matter may leak though the amount is minute. In the case that such a defect is caused, it is very important to immediately detect the generation of the defect and recognize the abnormality of the filter from the viewpoint of inhibition of air pollution.

As a method for detecting generation of such a defect, there is a method where a particulate matter detector is provided on the downstream of a DPF (see, e.g., JP-A-60-123761).

IntheinventiondescribedinJP-A-60-123761, particulate matter is charged by corona discharge, and the ion current is measured to measure the amount of the particulate matter. In such a method for measuring the ion current by charging the particulate matter, since the ion current of the charged particulate matter is very weak, a large-scale detection circuit is required in order to detect the very weak ion current, thereby requiring high costs. In addition, since it is difficult to effectively charge the particulate matter in the case that the exhaust gas has high flow rate, the measurement value of the particulate matter becomes smaller than the amount of the particulate matter actually contained in exhaust gas, and the error becomes large.

Therefore, there has been proposed, for example, a soot measurement apparatus or the like which is provided with a tabular negative electrode, a tabular positive electrode arranged to face the negative electrode, a voltage application means for generating an electric field in the space between the negative electrode and the positive electrode, and a heating means for heating the negative electrode and the positive electrode, and which measures the soot on the basis of the change of the electric current value between the negative electrode and the positive electrode upon applying a voltage between the negative electrode and the positive electrode (see, JP-A-2005-114557).

In the aforementioned particulate matter detector described in JP-A-2005-114557, even in the case that the entire flow rate of exhaust gas flowing at the downstream side of the DPF is high, only a part of the exhaust gas (i.e., particulate matter contained in exhaust gas) adheres to the detection face. Therefore, the measurement value having little error can be obtained. However, since the particulate matter once adhered to the electrode is, for example, constantly exposed to the exhaust gas having high flow rate, the particulate matter may be detached from the electrode during the measurement. In a sensor of such a system where the particulate matter is allowed to adhere to the detection face, when the detachment of particulate matter from the electrode is caused, there is a problem that the accurate measurement of the mass of the particulate matter is practically impossible.

### Summary of the Invention

The present invention has been made in view of the aforementioned problem and provides a particulate matter detector capable of measuring the amount of particulate matter contained in exhaust gas with high accuracy and a method for detecting particulate matter using the detector.

The present inventors have earnestly studied in order to solve such conventional art problems as described above and, as a result, found out that the above problems can be solved by correcting the measurement value by adding the decrease value to the measurement signal when the decrease of at least twice a magnitude of a signal noise of the measurement signal to be measured is confirmed during the measurement of 10 consecutive samples, which led to the present invention. This is because the particulate matter adhered to the electrode detaches from the electrode as described above when the amount reaches a certain level to form an aggregated particle having a certain level of mass. Specifically, according to the present invention, there are provided the following particulate matter detector and method for detecting particulate matter.

[1] A particulate matter detector comprising: an electrode portion arranged in an exhaust system of an internal combustion engine, a signal measuring portion for measuring continuously an electrical property of the electrode portion as a measurement signal by adsorbing particulate matter contained in exhaust gas passing through the exhaust system to the electrode portion, and a calculation portion for calculating an amount of particulate matter contained in exhaust gas based on a value of the measurement signal; wherein the particulate matter detector further comprising: a measurement signal memory portion for memorizing values of the measurement signal measured by the signal measuring portion, a signal judgement portion for judging the necessity of correction by comparing a calculated amount of change with a value of a background signal noise of the measurement signal after calculating an amount of change between values of the consecutive measurement signals of 10 or less samples memorized by the measurement signal memory portion and, and a correction portion for correcting the value of the measurement signal, if the calculated amount of the change shows a decrease of at least twice the value of the background signal noise of the measurement signal, by adding the decrease value to the value of the measurement signal where the decrease is confirmed; and wherein the particulate matter detector calculates an amount of the particulate matter by the calculation portion based on the value of the measurement signal corrected by the correction portion.

[2] The particulate matter detector according to [1], wherein the electrical property measured by the signal measuring portion is capacitance or resistance.

[3] The particulate matter detector according to [1] or [2], wherein at least a part of the electrode portion is covered with a dielectric body.

[4] The particulate matter detector according to [1] or [2], wherein a detector main body long in one direction and having at least one through-hole formed in one end portion thereof is further provided, and the electrode portion has at least a pair of measurement electrodes, which are disposed on an inner face of or inside a wall forming the through-hole of the detector main body.

[5] The particulate matter detector according to [4], which is further provided with at least a pair of dust collection electrodes embedded in the wall forming the through-hole of the detector main body on the outer side with respect to the position where the pair of measurement electrodes are embedded.

[6] A method for detecting particulate matter comprising: a measuring step of continuously detecting an electrical property of an electrode portion as a measurement signal by arranging an electrode portion in an exhaust system of an internal combustion engine to make particulate matter contained in exhaust gas passing through the exhaust system adsorbed to the electrode portion, and a calculation step of calculating an amount of particulate matter contained in exhaust gas based on the measurement signal; wherein the method further comprising: a recording step of recording values of the measurement signals measured by the measuring step in a measurement signal memory portion of the particulate matter detector, a judgement step of judging the necessity of correction by comparing a calculated amount of change with a value of a background signal noise after calculating an amount of change between values of the consecutive measurement signals of 10 or less samples recorded in the recording step, and a correcting step of correcting the value of the measurement signal, if the calculated amount of the change shows a decrease of at least twice the value of the background signal noise of the measurement signal, by adding the decrease value to the value of the measurement signal where the decrease is confirmed to obtain a corrected value, thereby an amount of particulate matter contained in exhaust gas passing through the exhaust system is obtained.

[7] The method for detecting particulate matter according to [6], wherein a capacitance or a resistance of the electrode portion is measured as the electrical property.

The particulate matter detector of the present invention is provided with a measurement signal memory portion for memorizing the value of the measurement signal measured by the signal measuring portion, a signal judgement portion for judging the necessity of correction by comparing the calculated amount of change with a value of a background signal noise of the measurement signal after calculating an amount of change between values of the consecutive measurement signals of 10 or less samples memorized by the measurement signal memory portion, and a correction portion for correcting the value of the measurement signal by adding the decrease value to the value of the measurement signal where the decrease is confirmed when the amount of the change shows a decrease of at least twice the value of the background signal noise of the measurement signal. According to the particulate matter detector of the present invention, when the particulate matter once adhered to the electrode is detached from the electrode, the measurement signal is corrected with the decrease of the measurement signal corresponding to the detached particulate matter to allow the measurement of the amount of the particulate matter contained in exhaust gas with high accuracy. In addition, according to the method for detecting particulate matter of the present invention, correction similar to that performed by the correction portion of the particulate matter detector of the present invention allows the measurement of the amount of the particulate matter contained in exhaust gas with high accuracy.

That is, in a particulate matter detector and a method for detecting the particulate matter, where the particulate matter contained in exhaust gas passing through an exhaust system is adsorbed to the electrode portion and where the electrical property of the electrode portion is continuously measured as a measurement signal to calculate the amount of the particulate matter from a value of the measurement signal, the measurement signal of the electrical property continuously measured tends to continuously increase in accordance with the adhesion (adsorption) of the particulate matter to the electrode. Therefore, when a decrease of a predetermined level, specifically, at least twice the magnitude of a signal noise is observed in the measurement signal measured during the measurement of 10 or less consecutive samples, an accurate measurement can be performed by adding a decrease value to the value of the measurement signal, taking it as detachment of the particulate matter which has once adhered to the electrode.

In particular, when the amount of the particulate matter adhered to the electrode reaches a certain level to form an aggregated particle having a certain level of mass, the aforementioned detachment from the electrode is prone to be caused to increase the error (deviation) of the value of the measurement signal. However, by the aforementioned correction, more accurate measurement can be realized. For example, the measurement signal shows deviation in the observed signal due to the signal noise. Therefore, in the case of performing the correction for all the decrease values of the measurement signal to be measured taken as the detachment of particulate matter, the corrected measurement value excessively rises over the amount of the particulate matter detached from the electrode, and this makes accurate measurement difficult.

### Brief Description of the Drawings

Fig. 1A is an explanatory view schematically showing a state where particulate matter is measured with disposing an embodiment of a particulate matter detector of the present invention in an exhaust system.

Fig. 1B is an explanatory view schematically showing a state where particulate matter is measured with disposing an embodiment of a particulate matter detector of the present invention in an exhaust system.

Fig. 1C is an explanatory view schematically showing a state where particulate matter is measured with disposing an embodiment of a particulate matter detector of the present invention in an exhaust system.

Fig. 2A is a graph showing the value of an electrical property measured by a particulate matter detector of the present invention before the correction is performed by the correction portion.

Fig. 2B is a graph showing the value of an electrical property measured by a particulate matter detector of the present invention after the correction is performed by the correction portion.

Fig. 3 is a flow chart showing an example of a process for detecting particulate matter by a particulate matter detector of the present invention.

Fig. 4A is a front view schematically showing another embodiment of a particulate matter detector of the present invention.

Fig. 4B is a side view showing one side face of the particulate matter detector shown in Fig. 4A.

Fig. 4C is a side view showing another side face of the particulate matter detector shown in Fig. 4A.

Fig.4D is a back view of the particulate matter detector shown in Fig. 4A.

Fig. 5 is a schematic view showing the A-A' cross section of Fig. 4B.

Fig. 6 is a schematic view showing the B-B' cross section of Fig. 5.

Fig. 7 is a schematic view showing the C-C' cross section of Fig. 5.

Fig. 8 is a schematic view showing the D-D' cross section of Fig. 5.

Fig. 9 is a schematic view showing the E-E' cross section of Fig. 5.

Fig. 10 is a schematic view showing the F-F' cross section of Fig. 5.

Fig. 11 is an explanatory view schematically showing a constitution of one embodiment of the particulate matter detector of the present invention.

### Reference Numerals

1: detector main body, 1a : one side end portion, 1b: the other side end portion, 1c: one side tip portion, 1d: the other side tip portion, 2: through-hole, 11: dust collection electrode (high voltage dust collection electrode), 12: dust collection electrode (ground dust collection electrode), 11a, 12a, 13a: leading terminal, 11b, 12b, 13b: wiring, 13: heating portion, 15, 16: measurement electrode, 15a, 16a: measurement electrode leading terminal (leading terminal), 15b, 16b: measurement electrode wiring (wiring), 21: electrode portion, 22: signalmeasuringportion, 23: calculation portion, 24: measurement signal memory portion, 25: signal judgement portion, 26: correction portion, 27: detector main body, 28: wiring, 31: pipe (pipe used in exhaust system), 36: particulate matter, 100, 100a: particulate matter detector

### Detailed Description of the Invention

Next, embodiments of the present invention will be described in detail with referring to drawings. However, the present invention is not limited to the following embodiments, and it should be understood that modifications, improvements, and the like of the design may suitably be added to the embodiments on the basis of ordinary knowledge of a person of ordinary skill in the range of not deviating from the gist of the present invention.

### [1] Characteristics of a particulate matter detector of the present invention:

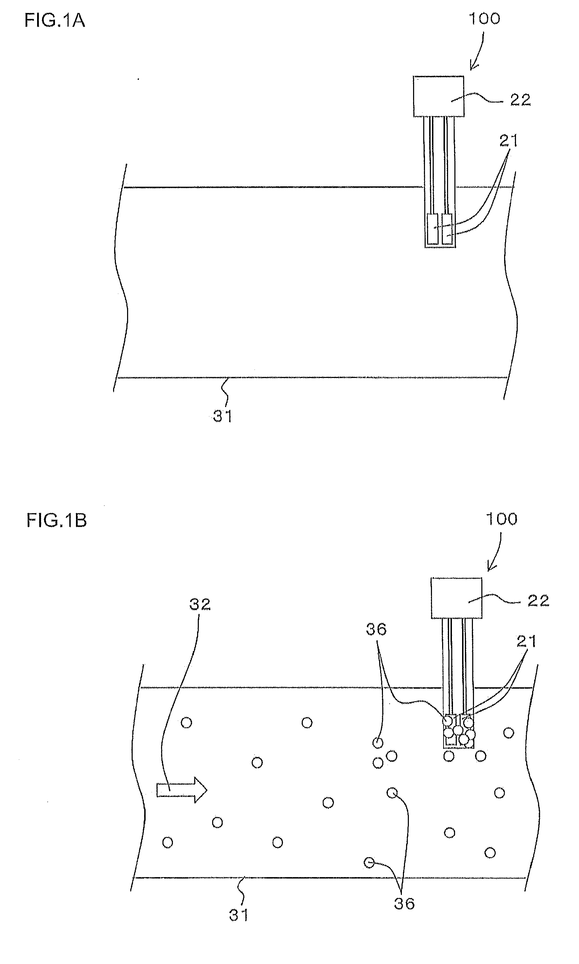

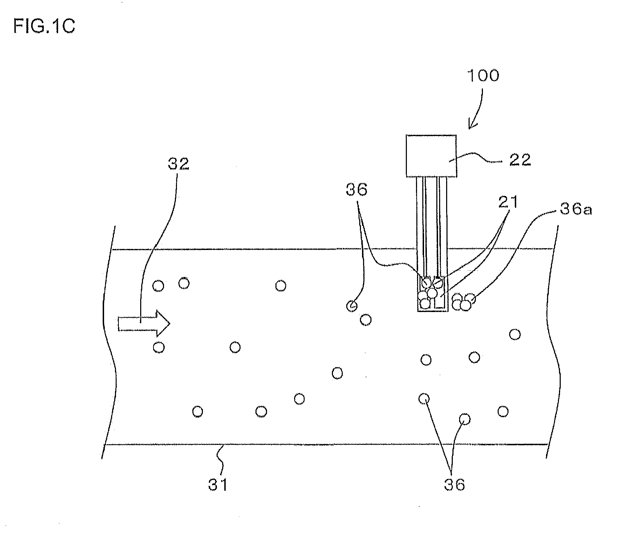

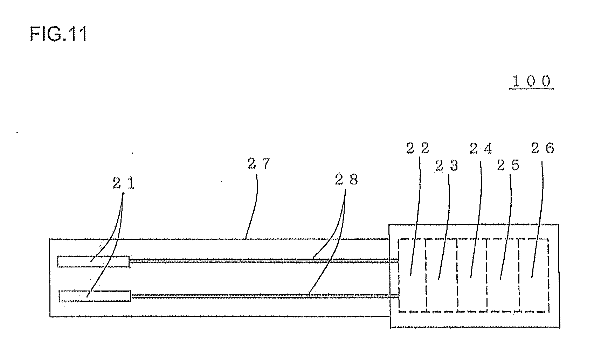

Figs. 1A to 1C are explanatory view schematically showing a state where measurement of particulate matter is performed with arranging one embodiment of a particulate matter detector of the present invention in an exhaust system. Incidentally, Fig. 1A shows a state before the measurement (i.e., the state before particulate matter adheres to the electrode portion), Fig. 1B shows a measurement state where the particulate matter adheres to the electrode portion, and Fig. 1C shows a state where a part of particulate matter adhered to the electrode portion is detached from the electrode portion. Fig. 11 is an explanatory view schematically showing a constitution of an embodiment of the particulate matter detector of the present invention.

As shown in Figs. 1A to 1C and 11, the particulate matter detector 100 of the present embodiment is a particulate matter detector 100 provided with an electrode portion 21 arranged in the exhaust system of an internal combustion engine, a signal measuring portion 22 adsorbing particulate matter 36 contained in exhaust gas 32 passing through the exhaust system to the electrode portion 21 and continuously measuring an electrical property of the electrode portion 21 as a measurement signal, and a calculation portion 23 for calculating an amount of particulate matter 36 contained in exhaust gas 32 based on the value of the measurement signal. Figs. 1A to 1C show an example where the pipe 31 used in the exhaust system is provided with the electrode portion 21. In addition, Fig. 11 shows an example where the electrode portion 21 is disposed in the detector main body 27 and where the electrode portion 21 is electrically connected to the signal measuring portion 22 with a wiring 28.

That is, the particulate matter detector 100 of the present embodiment can calculate the amount of particulate matter 36 contained in the exhaust gas 32 by measuring consecutively the electrical property of the electrode portion 21 for calculating the particulate matter 36 as a measurement signal with the signal measuring portion 22. For example, the amount of particulate matter 36 contained in the exhaust gas 32 can be estimated from the change in the electrical property of the measurement signal measured.

In addition, the particulate matter detector 100 of the present embodiment is further provided with a measurement signal memory portion 24, a signal judgement portion 25, and a correction portion 26. The measurement signal memory portion 24 memorizes the value of the measurement signal measured by the signal measuring portion 22. The signal judgement portion 25 judges the necessity of correction by comparing the calculated amount of change with a value of a background signal noise of the measurement signal after calculating an amount of change between values of the consecutive measurement signals of 10 or less samples memorized by the measurement signal memory portion 24. In addition, the correction portion 26 corrects the value of the measurement signal by adding the decrease value to the value of the measurement signal where the decrease is confirmed when the amount of the change shows a decrease of at least twice the value of the background signal noise of the measurement signal. In the particulate matter detector 100 of the present embodiment, the amount of particulate matter is calculated by the aforementioned calculation portion 23 based on the value of the measurement signal corrected by the correction portion 26. Therefore, as shown in Fig. 1C, in the case that the particulate matter 36 once adhered to the electrode portion 21 is detached from the electrode portion 21, for example, the decrease value of the measurement signal corresponding to the detached particulate matter 36a is compensated, thereby the amount of the particulate matter 36 contained in exhaust gas 32 is measured with high accuracy. If the correction of the value of the measurement signal by adding the decrease value to the value of the measurement signal where the decrease is confirmed is required, the correction of adding the same value as the added value to the value of the subsequent measurement signal is performed so as to make the correction reflected to the value of the subsequent measurement signal (i.e., values of the measurement signals measured after the measurement signal where the decrease is confirmed).

That is, in the particulate matter detector and the particulate matter detection method where particulate matter contained in exhaust gas passing through the exhaust system is adsorbed to the electrode portion and where an electrical property of the electrode portion is continuously measured as the measurement signal to detect the amount of the particulate matter from the measurement value, the measurement signal of the electrical property continuously measured tends to constantly increase in accordance with the adhesion (adsorption) of the particulate matter to the electrode. Therefore, when the decrease of a predetermined level, specifically, at least twice the magnitude of a signal noise is observed in the measurement signal measured during the measurement of 10 or less consecutive samples, measurement can be performed more accurately by adding the decrease value to the measurement value as the detachment of the particulate matter.

In particular, when the amount of the particulate matter adhered to the electrode reaches a certain level to form an aggregated particle having a certain level of mass, the aforementioned detachment from the electrode is prone to be caused to increase the error (deviation) of the measurement value. However, by the aforementioned correction, more accurate measurement can be realized. For example, the measurement signal shows deviation in the signal due to the signal noise. Therefore, in the case of performing the correction for all the decrease values of the measurement signal to be measured is taken as the detachment of particulate matter, the measurement value excessively rises over the amount of the particulate matter detached from the electrode, and this makes accurate measurement difficult.

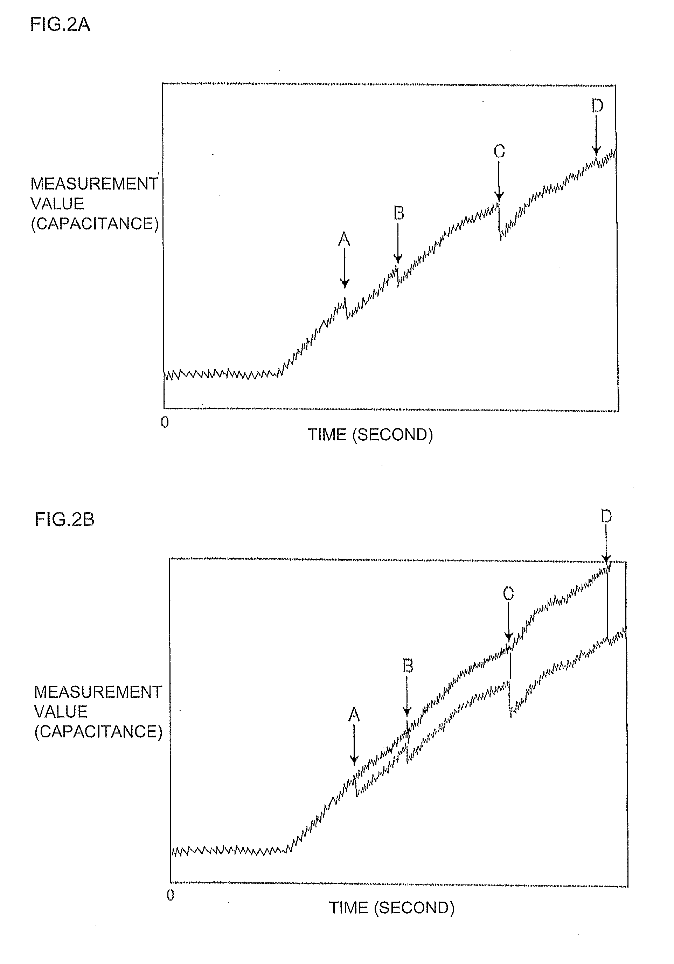

For example, Fig. 2A is a graph showing the results of continuously measuring the electrical property of the electrode portion as the measurement signal by adsorbing the particulate matter contained in exhaust gas to the electrode. In Fig. 2A, the axis of abscissas shows the measurement time (second), and the axis of ordinate shows measurement value of the electrical property. Incidentally, an example of the case where capacitance was measured as the electrical property is shown.

As shown in Fig. 2A, in the case of measuring an electrical property of the electrode portion as the measurement signal, the adhesion of the particulate matter having conductivity to the electrode portion increases the electrical properties to be measured. In addition, as shown in Fig. 1C, in the case that the particulate matter 36 once adhered to the electrode portion 21 is detached from the electrode portion 21, as the points A, B, C, and D shown in Fig. 2A, the measurement signal of the electrical property is decreased. However, as shown in Fig. 2A, the measurement signal to be measured has a signal noise, and deviation in measurement value due to the signal noise is caused besides the decrease due to the aforementioned detachment of the particulate matter.

Therefore, when correction of adding all the decrease values in the measurement signal to be measured to the measurement value is performed, even the value decreased due to the signal noise is included in the correction value, and the correction value exceeds the detachment amount of the particulate matter.

Since the aforementioned detachment from the electrode is caused when a lump (aggregated particles) having a certain level of mass is formed, in the particulate matter detector of the present embodiment, when the decrease of at least twice the magnitude of a signal noise of the measurement signal to be measured is confirmed during the measurement of 10 or less consecutive samples, the observed decrease is judged to be caused by the detachment of the particulate matter, and the correction by adding the decrease value to the measurement value is performed by the correction portion. This attains more accurate measurement.

That is, in the particulate matter detector of the present embodiment, as shown in Fig. 2B, the decrease of at least twice the magnitude of a signal noise as shown in the points A, B, C, and D in Fig. 2A is judged to be caused by the detachment of the particulate matter in the signal judgement portion. Then, the correction portion corrects the value of the measurement signal by adding the decrease value to the value of the measurement signal where the decrease was confirmed. Here, Fig. 2A is a graph showing the value of an electrical property measured by a particulate matter detector of the present invention before the correction is performed by the correction portion, Fig. 2B is a graph showing the value of an electrical property measured by a particulate matter detector of the present invention after the correction is performed by the correction portion.

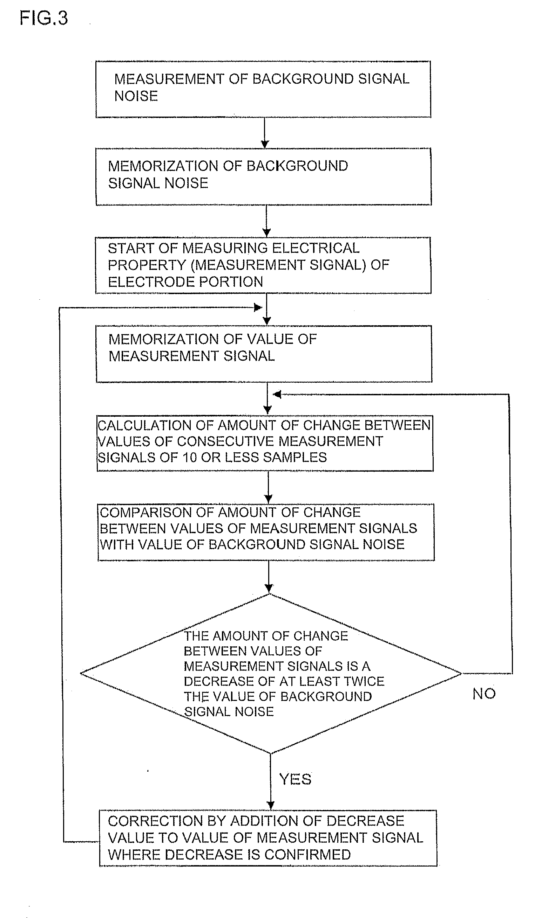

Here, a method for detecting particulate matter by the particulate matter detector of the present embodiment will further be described with referring to Fig. 3. Fig. 3 is a flow chart showing an example of a process for detecting particulate matter by the particulate matter detector of the present embodiment.

As shown in Fig. 3, in the first place, a background signal noise is measured as preparation for measurement of particulate matter. Then, the value of the background signal noise is recorded in a memory portion such as a measurement signal memory portion. Next, measurement of an electrical property (measurement signal) of the electrode portion is started, and the value of the measurement signal measured above is recorded in the measurement signal memory portion. Then, the value of the measurement signal measured above is corrected as necessary. Specifically, the amount of change between values of the consecutive measurement signals of 10 or less samples is calculated, and the amount of change between the values of the measurement signals is compared with the value of the background signal noise by the signal judgment portion to judge the necessity of correction. Here, in the case that the amount of the change between the values of the measurement signals is a decrease of at least twice the value of the background signal noise, correction by adding the decrease value to the value of the measurement signal where the decrease is confirmed is performed by the correction portion. The corrected value of the measurement signal is recorded in the measurement signal memory portion as a corrected measurement value. After the correction by the correction portion is completed, and in the case that a decrease of at least twice the value of the background signal noise is not confirmed, judgement and correction steps are continued further as to the consecutive values of the measurement signals of another 10 or less samples.

The electrode portion of the particulate matter detector is an electrode used as a detection portion (sensor) for measuring the change of an electrical property in accordance with the adhesion of the particulate matter. Examples of the electrode of the electrode portion include an electrode formed by applying a conductive paste on a surface or the like of the detector and an electrode made of a metal plate. The electrode portion is electrically connected to the signal measuring portion for measuring the measurement signal and is constituted so that it can detect (measure) the electrical property in the electrode portion by the signal measuring portion.

In addition, the electrode portion of the particulate matter detector of the present embodiment may include, for example, an electrode for generating an electric field for collecting particulate matter contained in exhaust gas to the detector besides the electrode for measuring the particulate matter. That is, since the particulate matter detector of the present embodiment makes particulate matter in exhaust gas to adhere to the particulate matter detector (in particular, electrode portion) and reads the change of an electrical property of the electrode (hereinbelow, sometimes referred to as "measurement electrode") constituting the electrode portion to detect the particulate matter in the exhaust gas from the change of an electrical property, the detector may further be provided with, for example, an electrode (hereinbelow, sometimes referred to as "dust collection electrode") for generating an electric field in the vicinity of the particulate matter detector to collect particulate matter flowing in the exhaust gas.

The signal measuring portion is a gauging portion which reads the change of electrical property of the electrode portion due to the adhesion of particulate matter to the electrode portion and in its vicinity. Since almost all the particulate matter contained in exhaust gas is of soot, the particulate matter has conductivity, and adhesion of the particulate matter to the electrode portion or the like causes the change of electrical property (in other words, value of the measurement signal) to be measured. Therefore, by measuring the change of an electrical property of the electrode portion provided in the exhaust system of an internal combustion engine, whether the exhaust gas contains particulate matter or not can be judged.

A specific signal measuring portion is a detection circuit which continuously measures the change of electrical property of the electrode portion as a measurement signal. For example, in the case that the electrical property of the electrode portion to be measured is capacitance, an alternating-current voltage is applied on one electrode, and, in the case that the capacitance has changed, detection is performed as a voltage proportional to the capacitance by a converter or a charge amplifier connected to the other electrode.

The measurement signal memory portion is a memory medium storing the value of the measurement signal measured by the signal measuring portion. The signal judgement portion reads the value of the measurement signal stored in the measurement signal memory portion and compares the read value of the measurement signal with the value of the background signal noise of the measurement signal to judge the necessity of correction. The "background signal noise" of the measurement signal is employed as an effective value of the electrical property of the electrode portion measured in a stable state with no disturbance in the measurement system from the electrode portion through the signal measurement portion.

As a more specific method for measuring the background signal noise, in the first place, the particulate matter detector is set in a stable state, and an electric property of the electrode portion is measured in the state. Next, from the resultant measurement data of the electric property, the standard deviation is calculated, and the standard deviation is determined as the "background signal noise" of the measurement signal.

In addition, though it depends on the constitution of the detection circuit to be used for the signal measuring portion, when the number of the measurement points (i.e., the number of samples) of the electrical property is increased in the aforementioned measurement of the background signal noise, the resultant value (i.e., the aforementioned standard deviation) of the background signal noise may become large. In the particulate matter detector of the present embodiment, it is enough to be able to remove the background signal noise from the correction of the measurement value by judging the difference between the background signal noise and the detachment of particulate matter. Therefore, the number of the samples in the measurement of the background signal noise is preferably 50 to 200. For example, in the case that the measurement in the actual signal measuring portion has intervals of 10 msec., the time required for the measurement of the background signal noise is preferably about 0.5 to 2 sec.

Incidentally, the aforementioned value of the background signal noise may be a value of a signal noise of the measurement signal measured in a state of the first use of the particulate matter detector. Such a value of the signal noise (value of a background signal noise) of the measurement signal measured beforehand can be stored in a memory medium such as a measurement signal memory portion. Alternatively, for example, in the case that a large number of particulate matter detectors having the same constitution are manufactured and that such particulate matter detectors are disposed in various automobiles and the like to be used, in these particulate matter detectors having the same constitution, a unified value of the background signal noise may be set in advance. Such a unified value of the background signal noise can be stored in a memory medium such as a measurement signal memory portion. That is, in the case that the value of the background signal noise of a specific particulate matter detector is known in advance, the step of measuring the value of background signal noise may be omitted, and the set value of the background signal noise may be used for judgement by the signal judgement portion.

In the particulate matter detector of the present embodiment, the decrease of at least twice the magnitude of a background signal noise is determined as the detachment of particulate matter. The reason is as follows. In the case of measuring the change of an electrical property of the electrode portion by the signal measuring portion, the background signal noise has a property of almost normal distribution called as white noise in a portion where the background signal noise has little change because of the number of samples of the electrical properties. In normal distribution, in the gauss distribution (probability density function) shown by the average µ and the standard deviation σ the probability of containing the deviation from the average µ in the range of ±1 σ or less is 68.26%, the probability of containing the deviation from the average µ in the range of ±2 σ or less is 95. 44%, and the probability of containing the deviation from the average µ in the range of ±3 σ or less is 99.74%. Therefore, the signal having a magnification of at least twice the normal distribution as the background signal noise is considered,to be a significant signal.

Incidentally, the aforementioned correction portion judges the decrease as detachment of particulate matter when the amount of change between values of the consecutive measurement signals of 10 or less samples is a decrease of at least twice the magnitude of the value of the background signal noise, and the correction by adding the decrease value to the value of the measurement signal (hereinbelow, sometimes referred to as "measurement value") where the decrease is confirmed. Since the detachment of particulate matter from the electrode portion is caused in an extremely short period of time, in the case that the resolution capability of the detection circuit used for the signal measuring portion is sufficient, it is preferable to perform correction when the aforementioned decrease is confirmed during the measurement of 5 or less consecutive samples, and it is more preferable to perform correction when the aforementioned decrease is confirmed during the measurement of 3 or less consecutive samples. Incidentally, when the aforementioned decrease is not confirmed within the measurement of 10 samples, for example, in the case that the temperature change is caused in the exhaust system where the electrode portion is provided, the change of the measurement value due to the temperature change may have the value of at least twice the background signal noise, and the change of the measurement value due to temperature change or the like may be included in the correction value. By specifying the sample number for confirming the amount of the change to 10 or less consecutive samples, the change by the temperature change or the like hardly affects, and the decrease due to the detachment of particulate matter from the electrode portion can selectively be detected. Incidentally, in the case of the measurement of less than 3 consecutive samples, for example, the measurement of one sample, there is a possibility that particulate matter may detach during the measurement, which may result in poor accuracy.

Incidentally, "during the measurement of 10 consecutive samples" described above means a time interval for performing measurement 10 times in the case that the measurement time to obtain one measurement value in the continuously performed measurement of an electrical property of the signal measuring portion is determined as one sample time. That is, "the decrease of at least twice the magnitude of a background signal noise is confirmed during the measurement of 10 or less consecutive samples" means the case that the decrease of at least twice the magnitude of the background signal noise is confirmed during the measurement of consecutive measurement signals up to 10 times. Therefore, in the case that the measurement time for one time (i.e., measurement time for one sample) is 10 msec., the measurement time for 10 consecutive samples is 100 msec.

The measurement time for one sample regarding an electrical property in the signal measuring portion is preferably 1 to 50 msec., more preferably 2 to 20 msec., particularly preferably 5 to 15 msec. The measurement of the electrical property of the electrode portion with such measurement time enables the measurement accurate and excellent in resolution capability. Though the lower limit of the measurement time depends on the performance of the detection circuit, the practical lower limit is 1 msec. as described above. In addition, when the measurement time is too long, after the measurement value is decreased by the detachment of particulate matter, different particulate matter adheres to the electrode portion, and thereby the aforementioned decrease due to the detachment of the particulate matter is balanced out. Therefore, it may be impossible to successfully detect the detachment of particulate matter.

Incidentally, in the particulate matter detector of the present embodiment, correction is performed by confirming the decrease of the measurement value during the measurement of 10 or less samples. However, in order to perform more detailed measurement and correction, the decrease is confirmed during the measurement of preferably 5 or less samples, more preferably 3 or less samples. Such constitution enables to perform more accurate measurement.

It is preferable that the particulate matter detector of the present embodiment is further provided with a particulate matter removal means capable of removing particulate matter adhered to the electrode portion, more preferably, the particulate matter detector. Though there is no particular limitation on the constitution of the particulate matter removal means, an example is a heater capable of combusting and removing the adhered particulate matter by applying heat to the section imparting the change of the electrical property to be measured by the electrode portion. Incidentally, the removal of the particulate matter adhered to the electrode portion by a particulate matter removal means as described above may be referred to as "regeneration" of the particulate matter detector. The particulate matter detector of the present embodiment preferably performs the detection of particulate matter while performing regular regeneration of the detector with the aforementioned removal means.

In the particulate matter detector of the present embodiment, the electrical property measured by the signal measuring portion is not specifically limited, however, it is preferably capacitance or resistance. Such constitution enables to successfully perform the detection of particulate matter contained in exhaust gas and perform the aforementioned correction by the correction portion more accurately.

### [2] Constitution of particulate matter detector of the present invention:

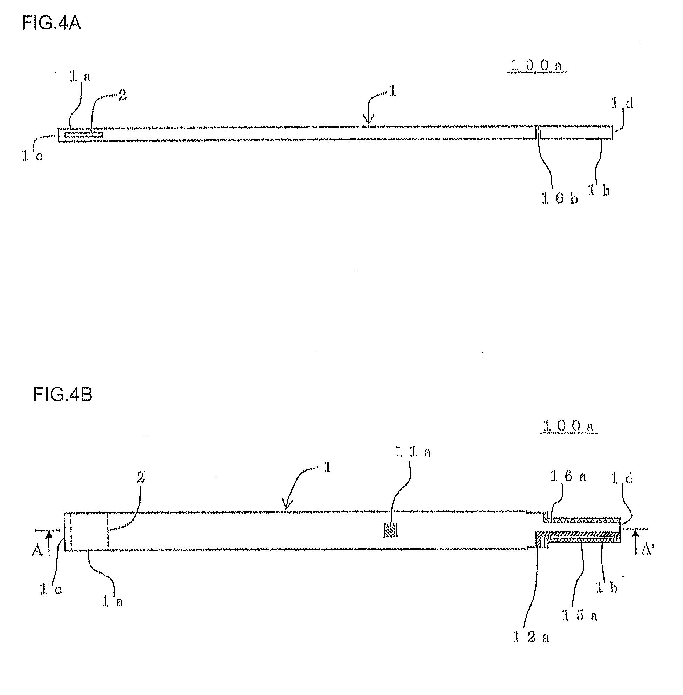

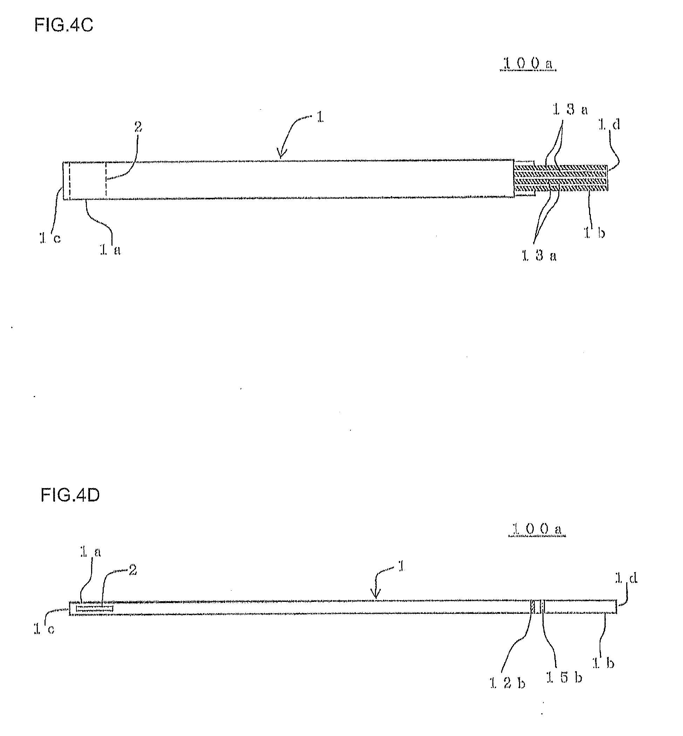

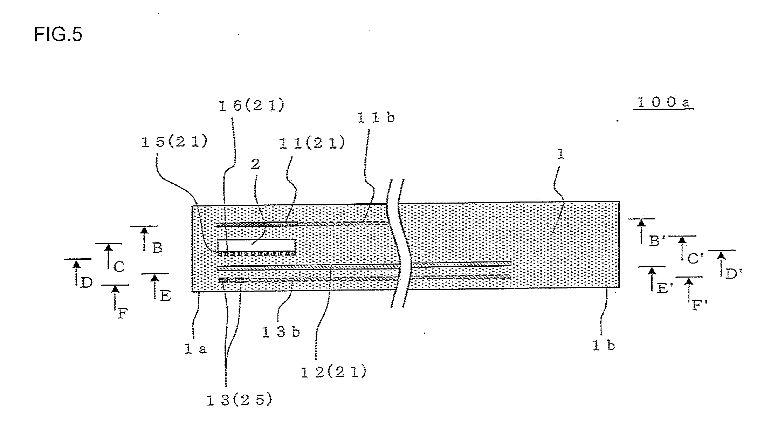

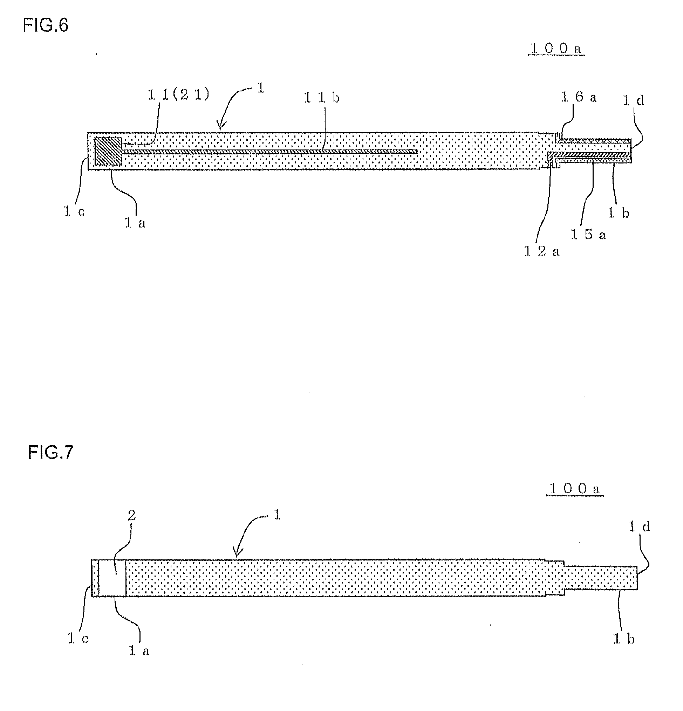

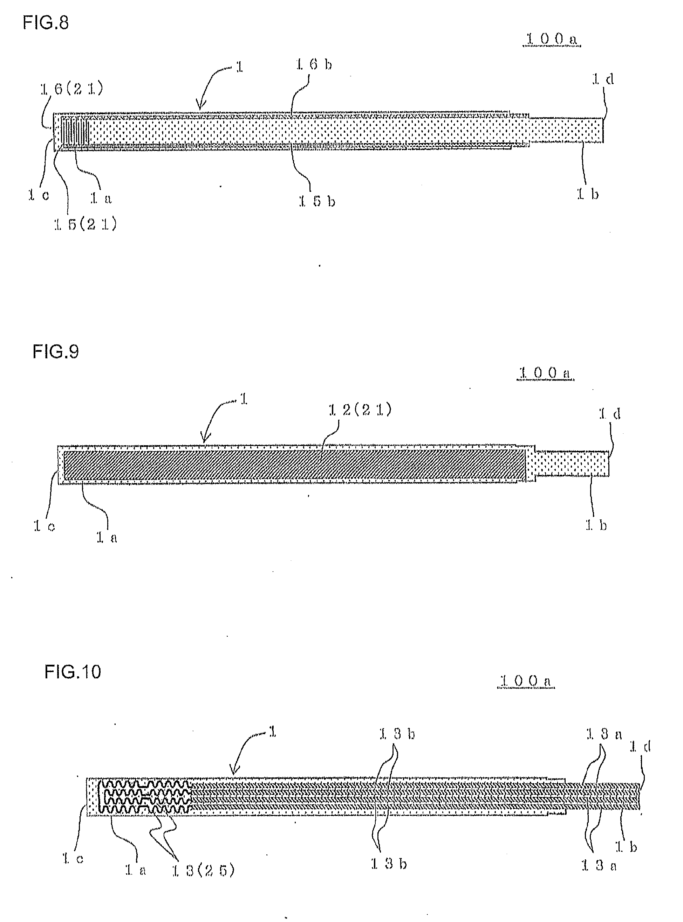

Next, more specific constitution of a particulate matter detector of the present invention will be described in more detail with the particulate matter detector shown in Figs. 4A to 4D and 5 to 10 as examples. Here, Fig. 4A is a front view schematically showing another embodiment of a particulate matter detector of the present invention, Fig. 4B is a side view showing one side face of the particulate matter detector shown in Fig. 4A, Fig. 4C is a side view showing another side face of the particulate matter detector shown in Fig. 4A, and Fig.4D is a back view of the particulate matter detector shown in Fig. 4A. In addition, Fig. 5 is a schematic view showing the A-A' cross section of Fig. 4B, Fig. 6 is a schematic view showing the B-B' cross section of Fig. 5, Fig. 7 is a schematic view showing the C-C' cross section of Fig. 5, Fig. 8 is a schematic view showing the D-D' cross section of Fig. 5, Fig. 9 is a schematic view showing the E-E' cross section of Fig. 5, and Fig. 10 is a schematic view showing the F-F' cross section of Fig. 5.

The particulate matter detector 100a shown in Figs. 4A to 4D and 5 to 10 is provided with a detector main body 1 long in one direction and having at least one through-hole (hollow) 2 formed in one end portion 1a, at least a pair of measurement electrodes 15, 16, which are disposed on an inner face of or inside a wall forming the through-hole 2, and at least a pair of dust collection electrodes 11, 12 which are embedded in each of the facing walls forming the through-hole 2 on the outer side with respect to the position where the pair of measurement electrodes 15, 16 are embedded and which are covered with a dielectric body to detect particulate matter contained in exhaust gas. The electrode portion 21 of the particulate matter detector 100a is constituted of the pair of measurement electrodes 15, 16 and the pair of dust collection electrodes 11, 12 described above. The pair of measurement electrodes 15, 16 and the pair of dust collection electrodes 11, 12 are connected to the leading terminals 15a, 16a, 11a, 12a by means of the wirings 15b, 16b, 11b, 12b to electrically connect the signal measuring portion 22 (see Fig. 11) to the leading terminals 15a, 16a, 11a, 12a. In addition, the particulate matter detector 100a has a heating portion 13 as the removal means 25. In addition, each of the pair of measurement electrodes 15, 16 branches into plural electrodes (e.g., branches to have a comb shape as shown in Fig. 8) to have plural facing portions.

The particulate matter detector 100a can electrically adsorb the charged particulate matter contained in a fluid flowing into the through-hole 2 or the particulate matter contained in a fluid flowing into the through-hole 2 and charged by the application of a voltage to the pair of dust collection electrodes 11, 12 to the walls of the through-hole 2. Further, by measuring the change of an electrical property of the walls forming the through-hole 2 by the aforementioned pair of measurement electrodes 15, 16, the mass of the particulate matter adsorbed to the wall faces of the through-hole 2 can be detected. This enables the particulate matter detector 100a of the present embodiment to pass exhaust gas or the like through the through-hole 2 to detect particulate matter contained in exhaust gas.

The particulate matter detector 100a does not directly measure all the particulate matter contained in exhaust gas flowing on the downstream side of a DPF or the like, but measures the amount of the particulate matter flowing into the through-hole 2 to be able to estimate the amount of the entire particulate matter in the exhaust gas on the basis of the measured value. This enables to measure a minute amount of particulate matter.

In addition, since the particulate matter detector 100a does not measure all the amount of the exhaust gas as described above, the particulate matter detector 100a can be miniaturized and set in a small space.

In addition, even in the case that the flow rate of the entire exhaust gas flowing on the downstream side of a DPF or the like is high, since only a part of the exhaust gas (i.e., particulate matter contained in the exhaust gas) is introduced into the through-hole 2, the particulate matter in the through-hole 2 can effectively be charged to be able to obtain a measurement value with little error.

In addition, since the detector main body 1 is formed to be long in one direction and has a through-hole 2 formed in one side end portion 1a with the pair of dust collection electrodes 11, 12 and the pair of measurement electrodes 15, 16 being disposed (embedded) in the end portion 1a, it is possible that the through-hole 2 and the electrodes (e.g., the dust collection electrode 11 and the pair of measurement electrodes 15, 16) are inserted into a pipe used in an exhaust system where exhaust gas having high temperature passes through and that the other side end portion 1b is protruded from the pipe used in the exhaust system. This enables the portion intended not to be exposed to high temperature, such as the leading terminal of each of the electrodes, to be protruded from the pipe used in the exhaust system to be able to perform accurate and stable measurement.

Incidentally, it is necessary that the detector main body 1 used for the particulate matter detector has at least one through-hole 2 described above, and two or more through-holes 2 may be formed. In addition, since the detector main body 1 is formed of a dielectric body, the pair of dust collection electrodes 11, 12 and the wirings 11b, 13b, 15b, 16b are covered with a dielectric body.

In addition, it is necessary that at least pair of the aforementioned measurement electrodes 15, 16 are provided, and two or more pair of the aforementioned measurement electrodes 15, 16 may be provided. Incidentally, Fig. 5 shows the example of the case where a pair of measurement electrodes 15, 16 are disposed on the inner side face of one side wall forming the through-hole 2. However, the electrodes 15, 16 may be embedded in the inside of one side wall forming the through-hole 2.

There is no particular limitation on the shape of a pair of measurement electrodes as long as the electrodes are disposed so that the change of an electrical property of the wall can be measured when particulate matter is adsorbed to the wall of the through-hole. Incidentally, as shown in Fig. 8, it is preferable that the pair of the measurement electrodes 15, 16 are linear and long to face each other on the inner side face or inside a wall of the through-hole 2. Further, it is preferable that each of the pair of linear measurement electrodes 15, 16 branches into plural electrodes (e.g., branches to have a comb shape as shown in Fig. 8) to have plural facing portions (e.g. the electrodes are disposed to face each other so that the comb shaped portions are disposed to fit each other at predetermined intervals). Such constitution enables the portions facing each other of the pair of measurement electrodes 15, 16 to be long (wide) to be able to measure more accurately.

Incidentally, the particulate matter detector 100a can exhibit the effect particularly when the particulate matter passing through the through-hole 2 is soot discharged from a diesel engine.

### [2-1] Detector main body:

The detector main body is a portion having at least one through-holes in one side end portion thereof and constituted to be long in one direction to function as a substrate of the particulate matter detector. The detector main body is constituted of a dielectric body, and at least a pair of dust collection electrodes are disposed inside the walls facing each other and forming the through-hole to be able to generate an electric field in the through-hole by applying a voltage to the pair of dust collection electrode.

It is preferable that the dielectric body constituting the detector main body is of at least one kind selected from the group consisting of, for example, alumina, cordierite, mullite, glass, zirconia, magnesia, and titania. Of these, alumina can suitably be used. By embedding the dust collection electrodes inside the detector main body of such a dielectric body, the dust collection electrodes covered with a dielectric body can be formed. In addition, the particulate matter detector has excellent thermal resistance, anti-dielectricbreakdownproperty, and the like. Here, the "dielectric body" means a substance where dielectricity is dominant over conductivity and which serves as an insulator against a direct-current voltage .

Incidentally, the "one side end portion of the detector main body" means the range from the tip portion 1C on one side of the detector main body to the position corresponding to the length of 50% of the whole length of the detector main body 1. In addition, the "other side end portion of the detector main body" means the range from the tip portion 1d on the other side of the detector main body to the portion corresponding to the length of 50% of the whole length of the detector main body 1. Incidentally, the end portion on the one side of the detector main body is the range from the tip portion 1C on the one side of the detector main body to the position corresponding to the length of preferably 40%, more preferably 30% of the whole length of the detector main body 1. In addition, the other end portion of the detector main body is the range from the tip portion 1d on the other side of the detector main body to the position corresponding to the length of preferably 40%, more preferably 30%, of the whole length of the detector main body 1 . The portion between the one side end portion 1a and the other side end portion 1b of the detector main body 1 is the portion obtained by removing the ranges of the one side end portion 1a and the other side end portion 1b from the detector main body 1 (see Figs. 4A to 4C).

In the particulate matter detector 100a shown in Figs. 4A to 4D, the detector main body 1 is formed to be long in one direction. Though the length in the longitudinal direction is not particularly limited, it is preferably the length where particulate matter in exhaust gas can be sampled efficiently when the detector main body 1 is inserted into the pipe used in the exhaust system.

In addition, though the thickness (length in the thickness direction, i.e., a direction perpendicular to both the "longitudinal direction of the detector main body" and the "gas flow direction") of the detector main body 1 is not particularly limited, it is preferably about 0.5 to 3 mm, for example. Here, the "thickness of the detector main body 1" means the thickness of the thickest portion in the aforementioned thickness direction. In addition, though the length in the flow direction when gas flows into the through-hole 2 of the detector main body 1 (length in the gas flow direction) is not particularly limited, it is preferably about 2 to 20 mm, for example. The length in the longitudinal direction of the detector main body 1 is preferably 10 to 100 times the thickness of the detector main body 1 and preferably 3 to 100 times the length of the gas flow direction of the detector main body 1.

The shape of the detector main body 1 may be a tabular shape having a rectangular cross section perpendicular to the longitudinal direction as shown in Figs. 4A to 4D. Alternatively, the shape may be a stick-like shape having a cross section having a circular shape, elliptic shape, or the like. Other shapes may be employed as long as the shape is long in one direction.

In the particulate matter detector 100a, there is no particular limitation on the shape and the size of the through-hole 2 as long as exhaust gas can pass therethrough and the amount of the particulate matter can be measured. For example, the length of the through-hole 2 in the longitudinal direction of the detector main body is preferably about 2 to 20 mm, and the width (length in the direction perpendicular to both the longitudinal direction of the detector main body and the gas flow direction) of the portion between the dust collection electrodes 11, 12 of the through-hole 2 is about 3 to 30 mm.

By setting the size of the through-hole 2 to be within the aforementioned ranges, the exhaust gas containing particulate matter can sufficiently flow into the through-hole 2, and the electric field generated from the dust collection electrodes 11, 12 can effectively adsorb the particulate matter to the inside of the through-hole 2.

In addition, as the shape of the through-hole 2, it is preferable that at least one of the inlet portion for the inflow of a fluid and the outlet portion for the outflow of the fluid of the through-hole 2 is open widely outwardly. Since at least one of the inlet portion for the inflow of a fluid and the outlet portion for the outflow of the fluid of the through-hole 2 is open widely outwardly, it becomes possible that the exhaust gas and the like which passes through the pipe used in the exhaust system can more efficiently be allowed to flow into the through-hole (in the case that the inlet portion is open widely outwardly) and discharged (in the case that the outlet portion is open widely outwardly).

In addition, such a particulate matter detector preferably has the detector main body 1 where a plurality of tape-shaped ceramic sheets are laminated. Since this enables to manufacture a particulate matter detector by laminating the tape-shaped ceramic sheets with putting each electrode, wiring, and the like therebetween, the particulate matter detector can efficiently be manufactured.

### [2-2] Measurement electrode (electrode portion):

At least a pair of measurement electrodes are disposed on an inner face of or inside a one side wall forming the through-hole. By electrically adsorbing particulate matter to a wall face of the through-hole by dust collection electrodes, an electrical property of the wall forming the through-hole is changed. The change of the electrical property is measured by the signal measuring portion as the measurement signal (electrical signal) flowing through the measurement electrodes.

There is no particular limitation on the shape of the measurement electrodes as long as the measurement electrodes can measure the change of an electrical property of a wall forming the through-hole as described above. However, a suitable example is a shape branched to have a comb shape as shown in Fig. 8. Such constitution enables to perform more accurate measurement.

There is no particular limitation on the thickness of the measurement electrodes, and, for example, it is preferably 5 to 30 µm. In addition, examples of the material of the measurement electrodes include platinum (Pt), molybdenum (Mo), and tungsten (W) .

To the measurement electrodes are electrically connected a pair of measurement electrode wirings extending toward the other end portion of the detector main body, respectively. There is no particular limitation on the width of each of the measurement electrode wirings, and it is preferably about 0.2 to 1 mm, for example. In addition there is no particular limitation on the thickness of each of the measurement electrode wirings, and it is preferably about 5 to 30 µm, for example. In addition, examples of the material for the measurement electrode wirings include platinum (Pt), molybdenum (Mo), and tungsten (W) .

In addition, as shown in Figs. 4A to 4D, the pair of measurement electrodes 15, 16 of the particulate matter detector 100a have leading terminals 15a, 16a, respectively, for each electrode on the other end portion 1b of the detector main body 1. The leading terminals 15a, 16a are electrically connected to the signal measuring portion 22 (see Fig. 11) for continuously measuring an electrical property of the measurement electrodes (electrode portion) as the measurement signal.

The gap between the portion where the through-hole 2 is disposed (i.e., one side end portion 1a) and the leading terminals 15a, 16a can be increased by the disposition of the leading terminals 15a, 16a of the pair of measurement electrodes 15, 16 in the other side end portion 1b of the detector main body 1. Therefore, it is possible that only the one side end portion 1a where the through-hole 2 and the like are disposed is inserted into a pipe used in the exhaust system where high temperature exhaust gas passes with protruding the other end portion 1b where the leading terminals 15a, 16a are disposed outside the pipe used in the exhaust system. If the leading terminals 15a, 16a are exposed to high temperature, particulate matter detection accuracy may be deteriorated to make stable detection difficult, or contact failure between an electric terminal and a harness for external connection may be caused in the case of use in a long period of time to make the measurement impossible. Therefore, by protruding the leading terminals 15a, 16a outside the pipe used in the exhaust system so as not to be exposed to high temperature, accurate and stable detection of particulate matter can be performed.

The leading terminals 15a, 16a disposed in the other end portion 1b of the detector main body 1 is preferably disposed so as to extend in the longitudinal direction on a side face of the other end portion 1b of the detector main body 1 as shown in Fig. 4B. Incidentally, though the other side end portion 1b of the detector main body 1 has a narrowed width in Fig. 4B, it is possible that the other side end portion 1b is narrow like this but not necessarily narrow. There is no particular limitation on the shape and the size of the leading terminals 15a, 16a. A preferable example is a band shape having a width of 0.1 to 2.0 mm and a length of 0.5 to 20 mm. Examples of the material for the leading terminals 15a, 16a include nickel (Ni), platinum (Pt), chrome (Cr), tungsten (W), molybdenum (Mo) , aluminum (Al), gold (Au) , silver (Ag) , and copper (Cu) .

### [2-3] Dust collection electrode (electrode portion):

The dust collection electrodes are electrodes embedded in the walls forming the through-hole and facing each other on the outer side with respect to the position where the pair of measurement electrodes are embedded and covered with a dielectric body constituting the detector main body. By applying a predetermined voltage between such dust collection electrodes 11 and 12, an electric field can be generated in the though-hole 2.

There is no particular limitation on the shape of the dust collection electrodes as long as the dust collection electrodes are embedded in walls forming the through-hole and can generate an electric field in the through-hole 2. In the particulate matter detector of the present embodiment, as shown in Fig. 6, one of the dust collection electrodes is a high voltage dust collection electrode 11 which is disposed inside the wall across the through-hole 2 from the wall where the measurement electrodes 15, 16 are disposed (see Fig. 5) and to which a high voltage is applied and the other dust collection electrode is a ground dust collection electrode 12 which is disposed inside the wall on the same side as the wall where the measurement electrodes 15, 16 are disposed (see Fig. 5) as shown in Fig. 9. The thickness of each of the dust collection electrodes is not particularly limited, and it is preferably 5 to 30 µm, for example. In addition, examples of the material for the dust collection electrode include platinum (Pt), molybdenum (Mo), and tungsten (W).

There is no particular limitation on the shape and size of the dust collection electrodes 11, 12 as long as an electric field can be generated in the through-hole 2. For example, the shape may be a rectangle, a circle, an ellipse, or the like. In addition, the size of the dust collection electrodes 11, 12 is preferably 70% or more of the area viewed from the side face of the through-hole 2, for example.

For example, Fig. 6 shows an example of the case that the high voltage dust collection electrode 11 is formed to have about the same size as that of the through-hole. To the high voltage dust collection electrode 11 is connected a wiring 11b extending in the longitudinal direction of the detector main body 1, and the wiring 11b is subjected to interlayer connection (via connection) to the leading terminal 11a shown in Fig. 4B at the tip (tip not connected to the electrode 11) portion thereof. There is no particular limitation on the width of the wiring 11b, and it is preferably about 0.2 to 1 mm, for example. There is no particular limitation on the thickness of the wiring 11b, and it is preferably about 5 to 30 µm, for example. In addition, examples of the material for the wiring 11b include platinum (Pt), molybdenum (Mo), and tungsten (W).

Though both leading terminals of the pair of dust collection electrodes may be disposed in the other end portion of the detector main body, it is preferable that the leading terminal 12a of the ground dust collection electrode 12 is disposed in the other side end portion 1b of the detector main body 1 and that the leading terminal 11a of the high voltage dust collection electrode 11 is disposed between the one side end portion 1a and the other side end portion 1b of the detector main body 1 as show in Figs. 4A to 4D. This enables to dispose the leading terminal 12a of the ground dust collection electrode 12 and the leading terminal 11a of the high voltage dust collection electrode 11 with a gap. Therefore, generation of creeping discharge on a surface of the detector main body 1 can effectively be inhibited when a voltage is applied to the gap between the leading terminal 11a and the leading terminal 12a to apply a voltage between the pair of dust collection electrodes 11 and 12.

In the particulate matter detector 100a, the distance between the leading terminal 11a and the leading terminal 12a is preferably 5 to 100 mm, more preferably 10 to 70 mm. When it is smaller than 5 mm, a short circuit due to creeping discharge may easily be caused. On the other hand, if it is longer than 100 mm, when the detector main body 1 of the particulate matter detector 100a is mounted to a pipe or the like used in an exhaust system in such a manner that the leading terminal 11a is located outside the pipe used in the exhaust system, the portion protruding outside the pipe used in the exhaust system of the detector main body 1 may become too long, which may make attachment of the detector main body 1 in a narrow space difficult.

In addition, the distance between the leading terminal 11a disposed between the one side end portion 1a and the other side end portion 1b of the detector main body 1 and the through-hole 2 is preferably 10 mm or more, more preferably 20 mm or more. When it is smaller than 10 mm, the heat of high temperature exhaust gas which passes through the pipe may easily influence the leading terminal 11a when the particulate matter detector 100a is mounted in the pipe in such a manner that the though-hole 2 portion is located inside the pipe used in the exhaust system.

There is no particular limitation on the shape and the size of the leading terminal 11a of the high voltage dust collection electrode 11, and it is preferable that the high voltage dust collection electrode 11 has a polygonal shape such as a quadrangle having a width of 0.5 to 3 mm and a length of 0.5 to 3 mm, for example. However, it may have a shape of a circle, an ellipse, a racetrack shape, or other shape. Examples of the material for the leading terminal 11a include nickel (Ni), platinum (Pt), chrome (Cr), tungsten (W) , molybdenum (Mo), aluminum (A1) , gold (Au) , silver (Ag), copper (Cu), stainless steel, kovar, and the like.

The distance between the high voltage dust collection electrode 11 and the through-hole 2 and the distance between the ground dust collection electrode 12 and the through-hole 2 are preferably 50 to 500 µm, more preferably 100 to 300 µm. Such a range enables to effectively generate an electric field in the through-hole. The distance between each of the dust collection electrodes 11, 12 and the through-hole 2 equals to the thickness of the portion facing the through-hole 2 of the dielectric body covering each of the dust collection electrodes 11, 12.

The condition of the electric field generated by the dust collection electrodes is preferably 50 to 200 kV/cm though it changes depending on the gap (distance between the pair of dust collection electrodes) and gas temperature.

The particulate matter detector 100a electrically adsorbs the particulate matter contained in a fluid (i.e., exhaust gas) flowing into the through-hole 2 to a wall face of the through-hole 2 and reads the change of an electrical property due to the adsorption of the particulate matter to detect the particulate matter contained in the exhaust gas. In the case that the particulate matter in the exhaust gas is already charged before it flows into the through-hole 2, the particulate matter is adsorbed by the electric field generated in the through-hole 2. On the other hand, in the case that the particulate matter is not charged, particulate matter is charged by the electric field generated in the through-hole 2 and thus the charged particulate matter is electrically absorbed on the wall face of the through-hole 2.

### [2-4a] Signal measuring portion:

The signal measuring portion is for measuring an electrical property of the electrode portion as a measurement signal (in other words, electrical signal). Specifically, in the case that the electrical property to be measured is, for example, capacitance, LCR meter 4263B or the like produced by Agilent Technologies can be used.

In the particulate matter detector 100a shown in Figs. 4A to 4D, the leading terminals 15a, 16a of the measurement electrodes 15, 16 are electrically connected to the signal measuring portion 22 (see Fig. 11) to be able to measure an electrical property of the measurement electrodes 15, 16 as a measurement signal.

### [2-4b] Measurement signal memory portion:

The value of the measurement signal measured by the signal measuring portion is stored in the measurement signal memory portion so that it can be read out. The value of the measurement signal stored in the measurement signal memory portion is used in the calculation of the particulate matter in the signal judgement portion, correction portion, and calculation portion. As a measurement signal memory portion, a known memory medium can be employed.

### [2-4c] Signal judgement portion:

The signal judgement portion has a judgement mechanism where the amount of change between the values of the consecutive measurement signals of 10 or less samples stored in the measurement signal memory portion is obtained, and the amount of change is compared with the value of the background signal noise to judge whether the correction to the value of the measurement signal is necessary or not. Specifically, in the first place, in the signal judgement portion, the value of the measurement signal stored in the measurement signal memory portion is read out to obtain the amount of change between the values of the consecutive measurement signals of 10 or less samples. Then, the amount of change is compared with the value of the background signal noise of the measurement signal. In the case that the value of the background signal noise is stored in the measurement signal memory portion, the value of the background signal noise is read out. An example of the signal judgement portion is an integrated circuit or the like which sequentially reads command lines of a program or the like for calculating the amount of change of the values of the measurement signals and comparing the amount of change with the value of the background signal noise. Incidentally, the "amount of change between the values of the measurement signals" obtained in the signal judgement portion means the maximum value of the displacement of the samples where the amount of change is obtained. Therefore, when the values of the 10 measurement signals in the 10 samples are compared, the maximum value of the displacement of the values of the 10 measurement signals is the amount of change.

### [2-4d] Correction portion:

The correction portion corrects the value of the measurement signal stored in the measurement signal memory portion as necessary based on the result obtained by the signal judgement portion. In a conventional particulate matter detector, the detachment of the particulate matter having once adhered to the electrode portion is overlooked to cause a large margin of error in the measurement value. However, in the particulate matter detector of the present embodiment, correction by adding the decrease for the detachment of particulate matter to the value of the measurement signal can be performed by the signal judgement portion and the correction portion to enable more accurate measurement . For example, as the correction portion, there can be used an integrated circuit which performs arithmetic processing of adding the decrease value to the value of the measurement signal where the decrease is confirmed when the amount of the change between the values of the measurement signals of 10 or less consecutive samples is at least twice the magnitude of the background signal noise.

### [2-4e] Calculation portion:

In addition, the particulate matter detector of the present embodiment is provided with a calculation portion for calculating the amount of the particulate matter contained in exhaust gas based on the value of the measurement signal. In the calculation portion, the amount of the particulate matter is calculated based on the value of the measurement signal after the correction by the correction portion. Further, the particulate matter detector of the present embodiment may be constituted in such a manner that the total amount of the particulate matter which has passed through the exhaust system is calculated from the amount of particulate matter (i.e., amount of particulate matter calculated by the calculation portion) contained in exhaust gas and the exhaust gas ventilation amount and that regeneration of the particulate matter detector is executed when the total amount of the particulate matter exceeds the predetermined reference value. Such constitution enables to perform regeneration of the particulate matter detector before particulate matter excessively adheres to the electrode portion (i.e., the measurement electrode) and enables to detect accurately the particulate matter in a continuous manner.

### [2-5] Heating portion (removal means):

The particulate matter detector 100a shown in Figs . 5 and 10 is provided with a heating portion 13 disposed (embedded) inside the detector main body 1 so as to follow a wall face (wall face parallel to a side face of the detector main body 1) of the through-hole 2. By heating the detector with such a heating portion 13, the particulate matter adsorbed to the wall forming the through-hole 2 can be heated and oxidized (i.e., the detector can be regenerated) . In addition, at the time of measurement or the like of the mass of the particulate matter, the temperature of the inside space of the through-hole 2 can be adjusted to be desired, and temperature can be adjusted for the stable measurement of the change of an electrical property of the wall forming the though-hole 2.

The heating portion 13 can be formed by the use of conductive paste for forming the heating portion. It may be formed of a linear metal material as shown in Fig. 10. In addition, it may have a wide film shape. Fig. 10 shows an example of the heating portion 13 where a liner metal material is disposed to have a wavy shape in a longitudinal direction of the detector main body 1. In addition, Fig. 10 shows an example where two corrugated portions extending in the longitudinal direction of the detector main body 1 is joined at the tip portion 1c on one side of the detector main body 1. Such a shape enables to uniformly heat the inside of the through-hole and to remove the particulate matter adhered to the electrode portion 21 (measurement electrodes 15, 16). Examples of the material for the heating portion 13 include platinum (Pt), molybdenum (Mo), tungsten (W), and the like. The heating portion 13 may be embedded in the detector main body 1 so as to follow a wall face of the through-hole 2. In addition, the heating portion 13 may be formed not only in the portion where the through-hole 2 is disposed, but also in such a manner that it extends to the other side end portion 1b of the detector main body 1 as shown in Fig. 10. This enables to reduce the temperature difference between the inside of the through-hole and the vicinity of the through-hole and has an advantage of hardly having a breakage of the device (detector main body) even by rapid heating. It is preferable that the temperature of the space inside the through-hole can be raised up to 650°C by the heating portion.

In addition, Fig. 10 shows an example of a case where two heating portions 13 are formed by two wirings. However, only one heating portion may be provided, or three or more heating portion may be provided. Though the illustration is omitted, a heating portion may be disposed on each of the walls on both sides where the through-hole is formed. That is, the disposition and the number of the heating portion(s) may be chosen according to the purposes of oxidization removal of trapped particulate matter, temperature adjustment, and the like.

In addition, the heating portions 13 shown in Fig. 10 are connected to the wirings 13b, and each of the wirings 13b is subjected to interlayer connection to each of the leading terminal 13a as is shown in Fig. 4D It is preferable that also the leading terminals 13a of the heating portions 13 are disposed on the other side end portion 1b of the detector main body 1 in order to avoid the thermal influence of the time of heating the one side end portion 1a of the detector main body 1 in the same manner as in the leading terminals 15a, 16a of the measurement electrodes 15, 16. In Fig. 4D, four leading terminals 13a are arranged so as to line up on the other side face side of the detector main body 1. However, the disposition of the leading terminal 13a is not limited to such disposition.

### [3] Method for detecting particulate matter:

Next, an embodiment of a method for detecting particulate matter of the present invention will be described. The method for detecting particulate matter of the present embodiment is a particulate matter detection method for detecting particulate matter by performing correction in the same manner as in the correction of the measured value performed by the particulate matter detector of the present embodiment described above.

That is, the method for detecting particulate matter of the present embodiment is a particulate matter detection method including a measuring step of continuously detecting an electrical property of an electrode portion as a measurement signal by arranging an electrode portion in an exhaust system of an internal combustion engine to make particulate matter contained in exhaust gas passing through the exhaust system adsorbed to the electrode portion, and a calculation step of calculating an amount of particulate matter contained in exhaust gas based on the measurement signal; wherein the method further comprising: a recording step of recording values of the measurement signals measured by the measuring step in a measurement signal memory portion of the particulate matter detector, a judgement step of judging the necessity of correction by comparing the calculated amount of change with a value of a background signal noise after calculating an amount of change between values of the consecutive measurement signals of 10 or less samples recorded in the recording step, and a correcting step of correcting the value of the measurement signal, if the calculated amount of the change shows a decrease of at least twice the value of the background signal noise of the measurement signal, by adding the decrease value to the value of the measurement signal where the decrease is confirmed to obtain a corrected value. In the particulate matter detection method of the present embodiment, a corrected amount of particulate matter contained in exhaust gas passing through the exhaust system is obtained based on the value of the measurement signal corrected in the aforementioned correcting step.

Such constitution enables to measure the amount of particulate matter contained in exhaust gas with high accuracy by correcting the decrease of the measured signal corresponding to the detached particulate matter in the case that the adhered particulate matter is detached from the electrode. In particular, the particulate matter adhered to the electrode is prone to be detached from the electrode as described above in the case that the amount reaches a certain level to form an aggregated particle having a certain level of mass to increase the error (deviation) of the measurement value. However, by performing correction as described above, more accurate measurement can be realized. For example, the measurement signal has deviation of signal as the signal noise. Therefore, in the case the correction is performed by compensating all the decrease values of the measurement signal to be measured as detachment of particulate matter, the measurement value excessively rises over the amount of the particulate matter detached from the electrode, and this makes accurate measurement difficult.

The method for detecting particulate matter of the present embodiment can be realized by using a particulate matter detector 100 shown in Figs. 1A to 1C and 11.

Further, in the method for detecting particulate matter of the present embodiment, for example, it is preferable to use a particulate matter detector where a detector main body long in one direction and having at least one through-hole formed therein is further provided in one end portion and where the electrode portion has at least a pair of measurement electrodes which are disposed on an inner face of or inside a wall forming the through-hole of the through-hole and at least a pair of dust collection electrodes embedded in each of the walls forming the through-hole of the detector main body on the outer side with respect to the position where the pair of measurement electrodes are embedded and covered with a dielectric body. An example of such a particulate matter detector is a particulate matter detector 100a shown in Figs. 4A to 4D.

The electrical property of the electrode portion to be measured is preferably capacitance or resistance. As the constitution of the signal measuring portion for measuring the electrical property, the constitution similar to that of the signal measuring portion described in the embodiment of a particulate matter detector of the present invention can suitably be employed. The measurement step can be performed by the use of such a signal measuring portion.

In addition, the recording step, judgement step, correcting step, and calculation step can be performed by the use of the measurement signal memory portion, signal judgement portion, correction portion, and calculation portion described in the embodiment of a particulate matter detector of the present invention. In addition, also each measurement condition such as correction condition, measurement interval of the signal measuring portion, or the like, are preferably the same as those described in the embodiments of a particulate matter detector of the present invention.

### Example

Hereinbelow, the present invention will be described more specifically by Examples. However, the present invention is by no means limited to these Examples.

### (Example 1)

As a particulate matter detector of the present invention, there was manufactured a particulate matter detector provided with an electrode portion arranged in an exhaust system of a combustion engine, a signal measuring portion continuously measuring the electrical property of the electrode portion as the measurement signal, a measurement signal memory portion for memorizing the value of the measurement signal measured by the signal measuring portion, a signal judgement portion, a correction portion for correcting the value of a specific measurement signal, and a calculation portion for calculating the amount of particulate matter contained in exhaust gas based on the value of the measurement signal. As shown in Figs. 4A to 4D and 5 to 10, the particulate matter detector is a particulate matter detector 100a for detecting particulate matter contained in exhaust gas having been provided with a detector main body 1 long in one direction and having at least one through-hole (hollow) 2 in the one side end portion 1a, at least one pair of measurement electrodes 15, 16 disposed on an inner face of or inside a wall forming the through-hole 2, and at least a pair of dust collection electrodes 11, 12 embedded in the walls facing each other and forming the through-hole 2, respectively, on the outer side with respect to the position where the pair of measurement electrodes 15, 16 are embedded and covered with a dielectric body. The electrode portion 21 of the particulate matter detector 100a is constituted of the pair of measurement electrodes 15, 16 and the pair of dust collection electrodes 11, 12, and the pair of measurement electrodes 15, 16 and the pair of dust collection electrodes 11, 12 are connected to the leading terminals 15a, 16a, 11a, 12a by means of the wirings 15b, 16b, 11b, 12b, respectively. The pair of measurement electrodes 15, 16 constitute the electrode portion of the present invention and are electrically connected to the signal measuring portion 22 as shown in Fig. 1A via the aforementioned wirings and leading terminals.

### (Manufacture of particulate matter detector)

In the first place, there were used alumina as the dielectric body raw material, polyvinylbutyral as the binder, di-2-ethylhexyl phthalate as the plasticizer, sorbitan trioleate as a dispersant, and an organic solvent (xylene : buthanol = 6 : 4 (mass ratio)) as the dispersion medium. These were put in an alumina pot and mixed together to obtain a slurried forming raw material for manufacturing green sheets. The amounts of the raw materials were 7 parts by mass of the binder, 3.5 parts by mass of the plasticizer, 1.5 parts by mass of the dispersant, and 100 parts by mass of the organic solvent with respect to 100 parts by mass of alumina.

Next, the slurried forming raw material for manufacturing green sheets was stirred under reduced pressure for defoaming to have a viscosity of 4 Pa· s. The viscosity of the slurry was measured with a B type viscometer.

Next, the slurried forming raw material obtained in the aforementioned method was formed into a sheet by a doctor blade method. At this time, green sheets having a cut portion formed therein were also manufactured so that a through-hole would be formed when the green sheets were laminated. The thickness of each of the green sheets where a measurement electrode is disposed was 50 µm, and the thickness of each of the other green sheets was 250 µm.

On the surfaces of the green sheets were formed each electrode (measurement electrode and dust collection electrode), a heating portion (removal means), each wiring, and each leading terminal. The conductive paste for forming the electrodes, ground electrodes, wirings, and leading terminals was prepared by adding, to a platinum powder, 2-ethylhexanol as a solvent, polyvinylbutyral as a binder, di-2-ethylhexyl phthalate as a plasticizer, sorbitan trioleate as a dispersant, alumina as a common material for the green sheets, and glass frit as a sintering auxiliary agent, and they were sufficiently kneaded by the use of a stone mill and a triroll mill (mass ratio of platinum : alumina : glass frit : 2-ethylhexanol : polyvinyl butyral : di-2-ethylhexyl phthalate : sorbitan trioleate of 80 . 15 : 5 : 50 : 7 : 3.5 : 1) .

Inaddition, the conductive paste for forming the heating portion was prepared by adding, to a platinum powder, 2-ethylhexanol as a solvent, polyvinylbutyral as a binder, di-2-ethylhexyl phthalate as a plasticizer, sorbitan trioleate as a dispersant, alumina as a common material for the green sheets, and glass frit as a sintering auxiliary agent, and they were sufficiently kneaded by the use of a stone mill and a triroll mill (mass ratio of platinum : alumina : glass frit : 2-ethylhexanol : polyvinyl butyral : di-2-ethylhexyl phthalate : sorbitan trioleate of 80 : 15 : 5 : 50 : 7 : 3.5 : 1).

The conductive paste prepared for forming each of the electrodes, grounded electrode, wiring, and attachment terminal was printed on the surfaces of the sheets by screen printing to form electrodes, wiring, attachment terminal of predetermined shapes. Specifically, a dust collection electrode was disposed on one side face of each of two green sheets out of the plural sheets. Regarding the high voltage dust collection electrode, a wiring extending toward the other side end portion was disposed to form two green sheets having dust collection electrodes.

Further, regarding the green sheet having a thickness of 50 µm, a pair of comb-shaped measurement electrodes were formed in a position for forming a through-hole. The pair of comb-shaped measurement electrodes were disposed to face each other so that the comb-shaped portions fit each other at predetermined intervals so as to have a comb teeth pitch of 0.35 mm (comb teeth clearance of 0.15 mm and each comb tooth width of 0.20 mm).

Further, regarding another green sheet, a cut portion serving as a through-hole was formed in a position which was to overlap the measurement electrode when it was superimposed onto the green sheet with the measurement electrode to form a green sheet having a cut portion formed therein. Further, regarding still another green sheet, a heating portion was formed by printing the conductive paste prepared for forming the heating portion in a position which was to overlap the cut portion serving as a through-hole when it was superimposed onto the green sheet having a cut portion formed therein, and a wiring extending from the heating portion toward the other side end portion was disposed to form a green sheet having a heating portion formed thereon.

Then, a green sheet having no other electrode or the like disposed thereon was superimposed onto each of the two green sheets each having a dust collection electrode so that the dust collection electrode and the wiring were covered with a green sheet to obtain a green sheet having a dust collection electrode embedded therein. The green sheet having a measurement electrode and the green sheet having the cut portion were put between two green sheets each having a dust collection electrode embedded therein to obtain a laminate. Further, the green sheet having a heating portion was laminated so as to be located outside the green sheet having a dust collection electrode embedded therein to obtain a green sheet laminate where the cut portion was sandwiched by the two dust collection electrodes and where the measurement electrode was sandwiched by the two wirings. Each wiring and each leading terminal corresponding to each wiring were subjected to interlayer connection (via connection) by the conductive paste embedding method.

As the lamination of the green sheets, the green sheets were subjected to pressure lamination using a monoaxial press machine capable of heating the green sheets to obtain an unfired particulate matter detector of a green sheet laminate.

The green sheet laminate (unfired particulate matter detector) was dried at 120°C and fired at 1500°C to manufacture a particulate matter detector. The LCR meter (LCR meter 4263B produced by Agilent Technologies) as the signal measuring portion was electrically connected to the leading terminal of the particulate matter detector by the use of a wiring. By the signal measuring portion, capacitance of the electrode portion can be measured continuously at 10 msec. intervals.

In addition, a memory medium as a measurement signal memory portion for memorizing the value of the measurement signal measured was connected to the signal measuring portion. In addition, a signal judgement portion constituted of an integrated circuit, a correction portion, and a calculation portion were disposed. The integrated circuit constituting the signal judgement portion is for obtaining the amount of change between the values of consecutive measurement signals of 10 or less samples stored in the measurement signal memory portion and executing the command lines for comparing the amount of change with the value of the background signal noise of the measurement signal. In addition, the integrated circuit constituting the correction portion executes the command lines for correcting the value of measurement signal when the amount of change shows a decrease of at least twice the magnitude of the background signal noise of the measurement signal by adding the decrease value to the value of the measurement signal where the decrease is confirmed. In addition, the integrated circuit for constituting the calculation portion executes the command lines for calculating the amount of the particulate matter contained in the exhaust gas based on the value of the measurement signal after the correction is performed. The particulate matter in combustion exhaust gas was detected by the use of the particulate matter detector obtained above of Example 1.

### (Measurement of background signal noise)

The background signal noise of the measurement signal serving as the reference for judgement by the aforementioned signal judgement portion was measured under the conditions of room temperature with no wind. The measured background signal noise (standard deviation) was 0.05 pF.

### (Measurement of measurement signal: detection of particulate matter)

The particulate matter detector of Example 1 was arranged in a part of a pipe of an exhaust system of a diesel engine to measure particulate matter. As the diesel engine, a 2000cc direct injection diesel engine was used, and exhaust gas was generated under the driving conditions of 1500 revolutions per minute, a torque of 24 N·m, an EGR (exhaust gas recirculation) opening of 50%, an exhaust gas temperature of 200°C, and intake air of 1.3 m³ (room temperature conversion) / min. The amount of particulate matter in the exhaust gas was 2. 0 mg/m³ by a smoke meter (Trade name of Model 4158 produced by Advanced Validation Labs). The electrical property of the electrode portion was measured as the measurement signal in the signal measuring portion, and the value of the measured measurement signal was memorized in the measurement signal memory portion. Further, the value of the measurement signal memorized in the measurement signal memory portion was judged in the signal judgement portion, and correction of the value of the measurement signal was performed as necessary. Further, the amount of the particulate matter was calculated in the calculation portion based on the value of the measurement signal after the correction. The measurement was performed six times. The values (measured values) of the measurement signal after the correction at the time of the completion of the measurement in each of the six measurements were 1.71 to 1.83 pF with a deviation of within 10%. Thus, the measurement having very high repeatability could be performed. Therefore, in the six time detection of particulate matter, the deviation of the amount (detection amount) of the particulate matter was within 10% .

### (Comparative Example 1)

There was manufactured a particulate matter detector constituted in the same manner as in Example 1 except that it was constituted so as to make the calculation of the amount of particulate matter from the value of the measured signal measured by the signal measuring portion without disposing an integrated circuit constituting the judgement portion and correction portion therein. Theparticulatematterwas detected six times in the same manner as in Example 1 using the particulate matter detector of Comparative Example 1.

By the use of the particulate matter detector of the Comparative Example 1, the value of the measurement signal of the electrode portion was measured in the same manner as in Example 1. The values of the measurement signals (measured values) at the time of the completion of the measurements of five times out of six times were 1.72 to 1.89 pF, and the value of the measurement signal (measured values) at the time of the completion of the measurement of the residual one time was 1.53 pF. The value of the measurement signal at the time of completion of the measurement of residual one time was very different from the other values of the measurement signals of the other measurements. The particulate matter detector of Comparative Example 1 is not provided with a correction portion for correcting the change between values of the measurement signals when the particulate matter is detached from the electrode portion like the particulate matter detector of Example 1. In the particulate matter detector of Comparative Example 1, in the case that the particulate matter which has once adhered to the electrode portion is detached from the electrode portion during measurement of the measurement signal, the value of the measurement signal obtained becomes small. Therefore, there is caused a large deviation in the values of the measurement signals between the case where the particulate matter is detached and the case where the particulate matter is not detached during the measurement. The amount of particulate matter calculated based on the value of the measurement signal measured in the case that the particulate matter is detached from the electrode portion becomes smaller than the amount of the particulate matter actually contained in the exhaust gas. The particulate matter detector of Comparative Example 1 caused a large margin of error in the amount of particulate matter detected.

A particulate matter detector of the present invention can be used as a detector for detecting particulate matter in exhaust gas discharged from an internal combustion engine. In addition, a method for detecting particulate matter of the present invention can be used as a method for measuring the amount of particulate matter in exhaust gas discharged from an internal combustion engine with high accuracy.

## Claims

1. A particulate matter detector comprising:
an electrode portion arranged in an exhaust system of an internal combustion engine,
a signal measuring portion for measuring continuously an electrical property of the electrode portion as a measurement signal by adsorbing particulate matter contained in exhaust gas passing through the exhaust system to the electrode portion, and
a calculation portion for calculating an amount of particulate matter contained in exhaust gas based on a value of the measurement signal;
wherein the particulate matter detector further comprising:
a measurement signal memory portion for memorizing values of the measurement signal measured by the signal measuring portion,
a signal judgement portion for judging the necessity of correction by comparing a calculated amount of change with a value of a background signal noise of the measurement signal after calculating an amount of change between values of the consecutive measurement signals of 10 or less samples memorized by the measurement signal memory portion, and
a correction portion for correcting the value of the measurement signal, if the calculated amount of the change shows a decrease of at least twice the value of the background signal noise of the measurement signal, by adding the decrease value to the value of the measurement signal where the decrease is confirmed; and
wherein the particulate matter detector calculates an amount of the particulate matter by the calculation portion based on the value of the measurement signal corrected by the correction portion.

2. The particulate matter detector according to Claim 1, wherein the electrical property measured by the signal measuring portion is capacitance or resistance.

3. The particulate matter detector according to Claim 1 or 2, wherein at least a part of the electrode portion is covered with a dielectric body.

4. The particulate matter detector according to Claim 1 or 2, wherein a detector main body long in one direction and having at least one through-hole formed in one end portion thereof is further provided, and
the electrode portion has at least a pair of measurement electrodes, which are disposed on an inner face of or inside a wall forming the through-hole of the detector main body.

5. The particulate matter detector according to Claim 4, which is further provided with at least a pair of dust collection electrodes embedded in the wall forming the through-hole of the detector main body on the outer side with respect to the position where the pair of measurement electrodes are embedded.

6. A method for detecting particulate matter comprising:
a measuring step of continuously detecting an electrical property of an electrode portion as a measurement signal by arranging an electrode portion in an exhaust system of an internal combustion engine to make particulate matter contained in exhaust gas passing through the exhaust system adsorbed to the electrode portion, and
a calculation step of calculating an amount of particulate matter contained in exhaust gas based on the measurement signal;
wherein the method further comprising:
a recording step of recording values of the measurement signals measured by the measuring step in a measurement signal memory portion of the particulate matter detector,
a judgement step of judging the necessity of correction by comparing a calculated amount of change with a value of a background signal noise of the measurement signal after calculating an amount of change between values of the consecutive measurement signals of 10 or less samples recorded in the recording step, and
a correcting step of correcting the value of the measurement signal, if the calculated amount of the change shows a decrease of at least twice the value of the background signal noise of the measurement signal, by adding the decrease value to the value of the measurement signal where the decrease is confirmed to obtain a corrected value, thereby a corrected amount of particulate matter contained in exhaust gas passing through the exhaust system is obtained.

7. The method for detecting particulate matter according to Claim 6, wherein a capacitance or a resistance of the electrode portion is measured as the electrical property.
